# EUROPÄISCHE PATENTSCHRIFT

(11) **EP 2 859 671 B1**
(45) Veröffentlichungstag und Bekanntmachung des Hinweises auf die Patenterteilung: **23.10.2019**
(21) Anmeldenummer: 13745004.5
(22) Anmeldetag: 23.07.2013
(51) Int. Cl.: H04J 3/06, B61L 25/00

(54) **ÜBERTRAGUNG EINES EREIGNISSIGNALS**
TRANSMISSION OF AN EVENT SIGNAL
TRANSMISSION D'UN SIGNAL D'EVENEMENT

(30) Priorität: 09.08.2012 DE 102012214125
(43) Veröffentlichungstag der Anmeldung: 15.04.2015
(73) Patentinhaber: Siemens Mobility GmbH, 81739 München (DE)
(72) Erfinder: ECKELMANN-WENDT, Uwe, 38302 Wolfenbüttel (DE); HELLWIG, Carsten, 38304 Wolfenbüttel (DE)
(86) Internationale Anmeldenummer: PCT/EP2013/065456
(87) Internationale Veröffentlichungsnummer: WO 2014/023567

(56) Entgegenhaltungen:
- EP-A1- 1 591 301
- DE-A1- 10 338 234
- US-A1- 2004 141 526
- US-A1- 2009 276 542
- HONG Y S ET AL: "Clock synchronization in wireless distributed embedded applications", SOFTWARE TECHNOLOGIES FOR FUTURE EMBEDDED SYSTEMS, 2003. IEEE WORKSHOP ON 15-16 MAY 2003, PISCATAWAY, NJ, USA,IEEE, 15. Mai 2003 (2003-05-15), Seiten 101-104, XP010640299, ISBN: 978-0-7695-1937-1

## Beschreibung

Die Erfindung bezieht sich u. a. auf ein Verfahren zum Übertragen eines Ereignissignals von einem Signalgeber zu einem Signalempfänger, wobei das Ereignissignal ein Ereignis bzw. das Eintreten eines Ereignisses sowie den Zeitpunkt des Ereignisses kennzeichnet.

Die Druckschrift "Clock synchronization in wireless distributed embedded applications, Hong Y. S. et al, IEEE Workshop on 15-16 May 2003" offenbart ein Synchronisationsverfahren für Anwendungen, die drahtlos miteinander in Verbindung stehen. Weitere Synchronisationsverfahren sind aus den US-Offenlegungsschriften US 2009/276542 A1 und 2004/141526 A1 bekannt.

Die Europäische Offenlegungsschrift EP 1 591 301 A1 offenbart ein Verfahren zum Betreiben von Schienenfahrzeugen.

Die deutsche Offenlegungsschrift DE 103 38 234 A1 beschreibt ein Ortungsverfahren.

Soll neben dem Ereignis als solchem auch die Zeit des Eintretens des Ereignisses vom Signalempfänger sicher verarbeitet werden können, so muss sichergestellt werden, dass der Signalempfänger den richtigen Zeitpunkt des Ereignisses berücksichtigen kann. Dies wird erschwert, wenn der Signalgeber und der Signalempfänger mit unabhängigen Zeitbasen arbeiten, die einen Gangunterschied und einen Zeitversatz aufweisen können.

Der Erfindung liegt daher die Aufgabe zugrunde, ein Verfahren zum Übertragen eines Ereignissignals von einem Signalgeber zu einem Signalempfänger anzugeben, bei dem ein Gangunterschied und ein Zeitversatz zwischen Zeitbasen berücksichtigt werden kann.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Ein wesentlicher Vorteil des erfindungsgemäßen Verfahrens ist darin zu sehen, dass der Signalempfänger das Ereignissignal nicht nur anhand der Zeitangabe auf der Zeitbasis des Signalgebers auswerten kann, sondern darüber hinaus eine Einbindung der Zeitbasis des Signalempfängers erfolgt. Dies ermöglicht es dem Signalempfänger zu erkennen, ob eine Verarbeitung eines gemeldeten Ereignisses im Signalempfänger verhindert werden sollte, beispielsweise, wenn die Zeitspanne zwischen dem tatsächlichen Eintreten des Ereignisses und der Verarbeitung des Ereignisses im Signalempfänger sehr groß ist und die Reaktion auf das Ereignis womöglich zu spät wäre. Der erfinderische Gedanke besteht also darin, die Auswertung des Ereignisses unter Einbeziehung zweier Zeitbasen durchzuführen, nämlich der des Signalgebers und der des Signalempfängers.

Besonders bevorzugt wird der Signalempfänger die Differenz zwischen dem im Ereignissignal angegebenen Zeitpunkt des Ereignisses gemäß der Zeitbasis des Signalgebers und dem vom Signalempfänger nach Empfang des Ereignissignals geschätzten Zeitpunkt des Ereignisses gemäß der Zeitbasis des Signalgebers bilden. Die weitere Auswertung des Ereignissignals kann in diesem Falle in Abhängigkeit von der Höhe der Differenz durchgeführt werden.

Vorzugsweise wird der Signalempfänger das Ereignissignal verwerfen, wenn die Differenz eine vorgegebene Schwelle erreicht oder überschreitet.

Das beschriebene Verfahren kann beispielsweise im Bereich der Eisenbahntechnik eingesetzt werden. Bei einem solchen Einsatz wird es als vorteilhaft angesehen, wenn der Signalgeber ein schienenfahrzeugseitiger Ortungsrechner ist, der als Ereignissignal ein den Ort eines Schienenfahrzeugs angebendes Ortungssignal erzeugt, und der Signalempfänger ein schienenfahrzeugseitiger Steuerrechner ist, der unter Heranziehung des Ortungssignals und zumindest eines der genannten Zeitpunkte des Ereignisses ein das Schienenfahrzeug steuerndes Steuersignal erzeugt.

Mit Blick auf die Schätzung von Gangunterschied und Zeitversatz zwischen den Zeitbasen wird es als vorteilhaft angesehen, wenn der Signalempfänger vom Signalgeber Zeitstempeltelegramme erhält, die jeweils die Uhrzeit des Signalgebers angeben, und der Signalempfänger anhand der empfangenen Uhrzeiten des Signalgebers den Gangunterschied und den jeweiligen Zeitversatz zwischen der eigenen Zeitbasis und der des Signalgebers schätzt.

Die Schätzung von Gangunterschied und Zeitversatz wird vorzugsweise derart durchgeführt, dass für jede empfangene Uhrzeit jeweils ein Zeitdifferenzwert zwischen der empfangenen Uhrzeit und der eigenen Uhrzeit zum Empfangszeitpunkt des jeweiligen Zeitstempeltelegramms ermittelt wird, die Zeitdifferenzwerte zeitfensterbezogen ausgewertet werden, wobei jedes Zeitfenster eine Vielzahl an zeitlich aufeinander folgenden Zeitdifferenzwerten enthält und wobei für jedes Zeitfenster jeweils der kleinste Zeitdifferenzwert bestimmt wird, und mit den kleinsten Zeitdifferenzwerten der Zeitfenster der Zeitversatz ermittelt wird. Durch Verwertung der jeweils kleinsten Zeitdifferenzwerte pro Zeitfenster wird sichergestellt, dass sich etwaige Verzögerungen in der Übertragung der Zeitstempeltelegramme nicht auf die Bestimmung des Zeitversatzes zwischen den Zeitbasen auswirken; es wird also näherungsweise davon ausgegangen, dass bei den kleinsten Zeitdifferenzwerten quasi keine relevante Verzögerung aufgetreten ist. Die Zeitfensterlänge der Zeitfenster ist vorzugsweise so kurz, dass der Gangunterschied zwischen den Zeitbasen auf die Ermittlung des kleinsten Zeitdifferenzwertes keinen nennenswerten Einfluss hat.

Vorzugsweise überschneiden sich zeitlich benachbarte Zeitfenster mindestens um die Hälfte der Zeitfensterdauer, besonders bevorzugt um 2/3 oder zumindest um 2/3.

Auch wird es als vorteilhaft angesehen, wenn eine Driftkompensation, die den Gangunterschied berücksichtigt, durchgeführt wird. Diesbezüglich wird es als vorteilhaft angesehen, wenn die kleinsten Zeitdifferenzwerte eines jeden Zeitfensters einer Driftkompensation unter Bildung driftkompensierter Zeitdifferenzwerte unterworfen werden, von den driftkompensierten Zeitdifferenzwerten der kleinste driftkompensierte Zeitdifferenzwert ermittelt wird und mit dem kleinsten driftkompensierten Zeitdifferenzwert der Zeitversatz ermittelt wird. Bei dieser vorteilhaften Variante lässt sich der tatsächlich "allerkleinste" Zeitdifferenzwert ermitteln, weil der Einfluss des Gangunterschiedes zwischen den Zeitbasen durch die Driftkompensation eliminiert wird.

Vorzugsweise wird der kleinste driftkompensierte Zeitdifferenzwert als Zeitversatz zwischen den Zeitbasen zu diesem Zeitpunkt angesehen und als solcher weiterverarbeitet.

Auch wird es als vorteilhaft angesehen, wenn mit den kleinsten Zeitdifferenzwerten der Zeitfenster eine Driftkennlinie bestimmt wird, deren Steigung den Gangunterschied zwischen den Zeitbasen angibt, und mit dem durch die Steigung angegebenen Gangunterschied der Zeitbasen der Zeitpunkt des Ereignisses gemäß der anderen Zeitbasis geschätzt wird.

Der eingangs genannte Korrekturwert kann beispielsweise den vom Signalgeber geschätzten Zeitpunkt des Ereignisses gemäß der Zeitbasis des Signalempfängers angeben.

Die Erfindung bezieht sich darüber hinaus auf eine Anordnung mit einem Signalgeber und einem Signalempfänger, wobei der Signalgeber zum Übertragen eines Ereignissignals zu einem Signalempfänger geeignet ist und wobei das Ereignissignal ein Ereignis und den Zeitpunkt des Ereignisses kennzeichnet. Erfindungsgemäß ist diesbezüglich vorgesehen, dass der Signalgeber derart ausgestaltet ist, dass er vom Signalempfänger Zeitstempeltelegramme erhält, die jeweils die Uhrzeit des Signalempfängers angeben, und anhand der empfangenen Uhrzeiten des Signalempfängers den Zeitversatz zwischen der eigenen Zeitbasis und der des Signalempfängers schätzt, den Zeitpunkt des Ereignisses gemäß der Zeitbasis des Signalempfängers schätzt, und zwar unter Heranziehung des Zeitpunkts des Ereignisses gemäß der eigenen Zeitbasis und dem geschätzten Zeitversatz zwischen der eigenen Zeitbasis und der anderen Zeitbasis, und bei Auftreten eines Ereignisses ein Ereignissignal erzeugt, das den Zeitpunkt des Ereignisses gemäß der Zeitbasis des Signalgebers und einen Korrekturwert kennzeichnet, der mittelbar oder unmittelbar den vom Signalgeber geschätzten Zeitversatz zwischen der Zeitbasis des Signalempfängers und der Zeitbasis des Signalgebers angibt, und der Signalempfänger derart ausgestaltet ist, dass er nach Empfang des Ereignissignals den Zeitpunkt des Ereignisses gemäß der Zeitbasis des Signalgebers schätzt, und zwar unter Heranziehung des vom Signalgeber geschätzten Zeitpunkts des Ereignisses gemäß der Zeitbasis des Signalempfängers und einem vom Signalempfänger geschätzten Zeitversatz zwischen der Zeitbasis des Signalempfängers und der Zeitbasis des Signalgebers, und die weitere Auswertung des Ereignissignals in Abhängigkeit von dem im Ereignissignal angegebenen Zeitpunkt des Ereignisses gemäß der Zeitbasis des Signalgebers und dem nach Empfang des Ereignissignals geschätzten Zeitpunkt des Ereignisses gemäß der Zeitbasis des Signalgebers durchführt.

Bezüglich der Vorteile der erfindungsgemäßen Anordnung sei auf die obigen Ausführungen im Zusammenhang mit dem erfindungsgemäßen Verfahren verwiesen, da die Vorteile des erfindungsgemäßen Verfahrens denen der erfindungsgemäßen Anordnung im Wesentlichen entsprechen.

Als vorteilhaft wird es angesehen, wenn der Signalgeber eine erste schienenfahrzeugseitige Rechnereinrichtung aufweist, die als Ereignissignal ein den Ort eines Schienenfahrzeugs angebendes Ortungssignal erzeugt, und der Signalempfänger eine zweite schienenfahrzeugseitige Rechnereinrichtung aufweist, die unter Heranziehung des Ortungssignals und zumindest eines der genannten Zeitpunkte des Ereignisses ein das Schienenfahrzeug steuerndes Steuersignal erzeugt.

Die Erfindung wird nachfolgend anhand von Ausführungsbeispielen näher erläutert; dabei zeigen beispielhaft
- Figur 1: ein Ausführungsbeispiel für eine Anordnung mit einem Signalgeber und einem Signalempfänger, wobei anhand der Anordnung ein Verfahren zum Übertragen eines Ereignissignals von dem Signalgeber zu dem Signalempfänger erläutert wird,
- Figur 2: beispielhaft die Übertragung von Zeitstempeltelegrammen zwecks Schätzung des Zeitversatzes und des Gangunterschiedes zwischen der Zeitbasis des Signalgebers und der des Signalempfängers bei der Anordnung gemäß Figur 1,
- Figur 3-4: beispielhaft die Auswertung der Zeitstempeltelegramme im Signalempfänger.
- Figuren 5-6: beispielhaft die Auswertung der Zeitstempeltelegramme im Signalgeber, und
- Figur 7: ein Ausführungsbeispiel für ein Schienenfahrzeug mit einem Signalgeber und einem Signalempfänger, zwischen denen ein Ortungssignal übertragen wird.

In den Figuren werden der Übersicht halber für identische oder vergleichbare Komponenten stets dieselben Bezugszeichen verwendet.

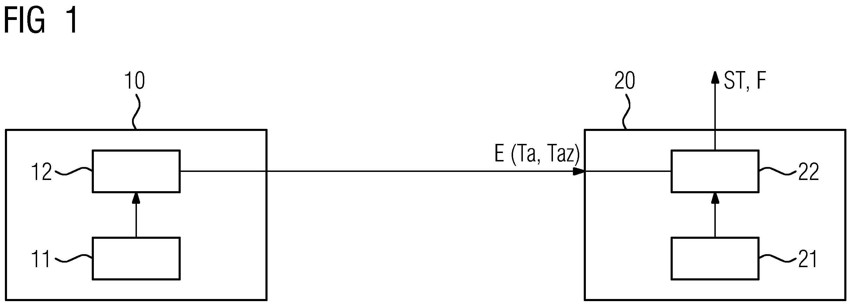

In der Figur 1 sieht man eine Anordnung mit einem Signalgeber 10 und einem Signalempfänger 20.

Der Signalgeber 10 weist eine Zeitbasis 11 und eine Steuereinrichtung 12 auf, bei der es sich beispielsweise um eine programmierbare Rechnereinrichtung handeln kann. Der Signalempfänger 20 weist eine Zeitbasis 21 und eine Steuereinrichtung 22 auf. Auch bei der Steuereinrichtung 22 kann es sich beispielsweise um eine programmierbare Rechnereinrichtung handeln.

Stellt die Steuereinrichtung 12 des Signalgebers 10 fest, dass ein Ereignis eingetreten ist, das dem Signalempfänger 20 gemeldet werden soll, so erzeugt sie ein entsprechendes Ereignissignal E(Ta, Taz). Das Ereignissignal E(Ta, Taz) beschreibt das eingetretene Ereignis und gibt den Zeitpunkt des Ereignisses an, und zwar als Zeitpunkt Ta des Ereignisses gemäß der Zeitbasis 11 des Signalgebers 10. Darüber hinaus gibt das Ereignissignal E(Ta, Taz) den Zeitpunkt Taz des Ereignisses gemäß der Zeitbasis 21 des Signalempfängers 20 an. Da die Steuereinrichtung 12 des Signalgebers 10 mit der Zeitbasis 21 des Signalempfängers 20 nicht in Verbindung steht, beruht die Angabe des Zeitpunkts Taz des Ereignisses auf einer Schätzung, die die Steuereinrichtung 12 des Signalgebers 10 vor oder bei der Erzeugung des Ereignissignals E(Ta, Taz) durchführt.

Die Steuereinrichtung 22 des Signalempfängers 20 wird nach Empfang des Ereignissignals E(Ta, Taz) den Zeitpunkt des Ereignisses erneut schätzen, und zwar bezogen auf die Zeitbasis 11 des Signalgebers 10. Der von dem Signalempfänger 20 geschätzte Zeitpunkt des Ereignisses - bezogen auf die Zeitbasis 11 des Signalgebers 10 - wird nachfolgend mit Ta' bezeichnet.

Die Schätzung des Zeitpunkt Ta' des Ereignisses bezogen auf die Zeitbasis 11 des Signalgebers 10 erfolgt unter Heranziehung des von der Steuereinrichtung 12 des Signalgebers 10 gelieferten Zeitpunkts Taz und eines vom Signalempfänger 20 anhand eines geschätzten Gangunterschiedes geschätzten Zeitversatzes dTz(t) zwischen der Zeitbasis 21 des Signalempfängers 20 und der Zeitbasis 11 des Signalgebers 10.

Die Steuereinrichtung 22 des Signalempfängers 20 wertet anschließend den im Ereignissignal E(Ta, Taz) angegebenen Zeitpunkt Ta des Ereignisses und den selbst geschätzten Zeitpunkt Ta' des Ereignisses - jeweils bezogen auf die Zeitbasis 11 des Signalgebers 10 - aus. Beispielsweise bildet die Steuereinrichtung 22 des Signalempfängers 20 die Differenz zwischen dem Zeitpunkt Ta und dem selbst geschätzten Zeitpunkt Ta' und erzeugt ein Fehlersignal F, wenn die Differenz eine vorgegebene Schwelle erreicht oder überschreitet. Wenn ein solches Fehlersignal F erzeugt wird bzw. wenn die Differenz die vorgegebene Schwelle erreicht oder überschritten hat, wird das Ereignissignal E(Ta, Taz) vorzugsweise verworfen und bleibt unberücksichtigt.

Andernfalls, wenn die Differenz die vorgegebene Schwelle unterschreitet, wird die Steuereinrichtung 22 des Signalempfängers 20 das Ereignissignal E(Ta, Taz) berücksichtigen und das gemeldete Ereignis weiterverarbeiten, beispielsweise bezogen auf die eigene Zeitbasis 21 unter Berücksichtigung des Zeitpunkts Taz, der im Ereignissignal E(Ta, Taz) angegeben ist, oder unter Berücksichtigung des Zeitpunkts Ta bezogen auf die Zeitbasis 11. Die Auswertung des Ereignissignals E(Ta, Taz) kann beispielsweise zur Erzeugung eines Steuersignals ST führen.

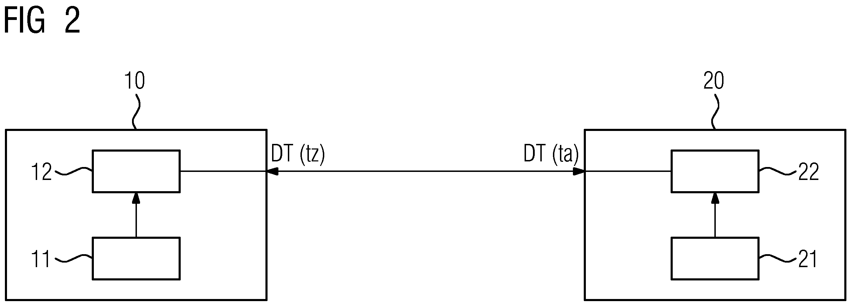

Vorzugweise werden der Signalgeber 10 und der Signalempfänger 20 den Zeitversatz und den Gangunterschied zwischen den beiden Zeitbasen 11 und 21 jeweils selbst schätzen. Dies soll nachfolgend beispielhaft anhand der Figuren 2-6 erläutert werden.

In der Figur 2 lässt sich erkennen, dass der Signalgeber 10 und der Signalempfänger 20 regelmäßig oder unregelmäßig einander Zeitstempeltelegramme DT(ta) und DT(tz) übermitteln.

Die Zeitstempeltelegramme DT(ta) werden von dem Signalgeber 10 erzeugt und geben die Uhrzeit gemäß der Zeitbasis 11 an, zu der die Zeitstempeltelegramme DT(ta) gebildet oder gesendet worden sind. Die Zeitstempeltelegramme DT(tz) werden von dem Signalempfänger 20 erzeugt und geben den Zeitstempel bzw. die Uhrzeit gemäß der Zeitbasis 21 an, zu der die Zeitstempeltelegramme DT(tz) gebildet oder gesendet worden sind.

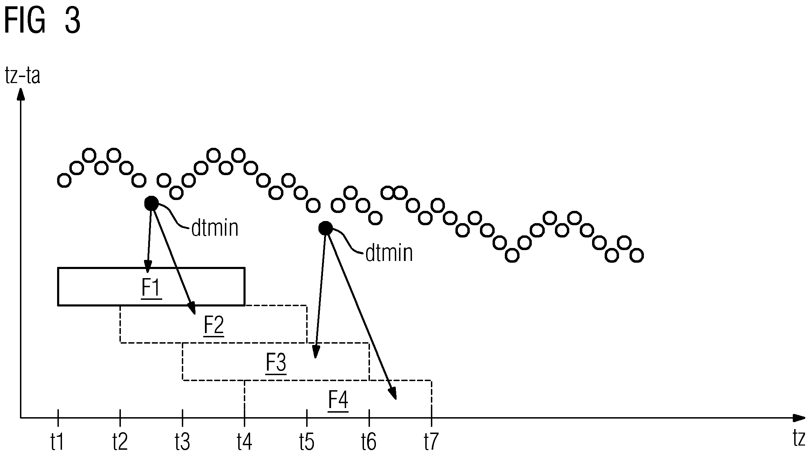

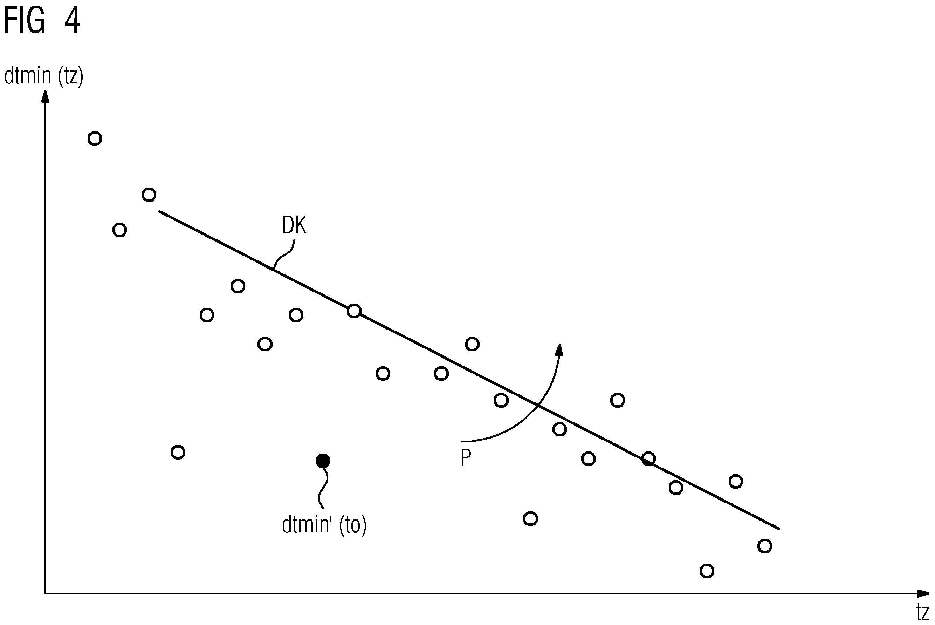

Die Figuren 3 und 4 zeigen beispielhaft, wie der Signalempfänger 20 die Zeitstempeltelegramme DT(ta) zur Schätzung des Gangunterschiedes und des zeitabhängigen Zeitversatzes dTz(t) auswerten kann.

Der Signalempfänger 20 wird die in den Zeitstempeltelegrammen DT(ta) enthaltenen Zeitstempel ta auslesen und durch Subtraktion des Empfangszeitpunkts tz gemäß der Zeitbasis 21 Zeitdifferenzwerte tz-ta bilden und diese über der Zeit auswerten. Dies zeigt beispielhaft die Figur 3. In der Figur 3 lässt sich erkennen, dass die Zeitdifferenzwerte zeitfensterbezogen ausgewertet werden, wobei jedes Zeitfenster eine Vielzahl an zeitlich aufeinander folgenden Zeitdifferenzwerten tz-ta enthält.

Bei der Darstellung gemäß Figur 3 erstreckt sich das Zeitfenster F1 vom Zeitpunkt t1 bis zum Zeitpunkt t4, das Zeitfenster F2 vom Zeitpunkt t2 bis zum Zeitpunkt t5, das Zeitfenster F3 vom Zeitpunkt t3 bis zum Zeitpunkt t6 und das Zeitfenster F4 vom Zeitpunkt t4 bis zum Zeitpunkt t7. Zeitlich benachbarte Zeitfenster überschneiden sich vorzugsweise mindestens um die Hälfte der Zeitfensterdauer, bei dem Ausführungsbeispiel gemäß Figur 3 genau um 2/3. Die Steuereinrichtung 22 des Signalempfängers 20 bestimmt für jedes Zeitfenster F1-F4 jeweils den kleinsten Zeitdifferenzwert. Die kleinsten Zeitdifferenzwerte sind in der Figur 3 mit dem Bezugszeichen dtmin gekennzeichnet.

Die Figur 4 zeigt beispielhaft den zeitlichen Verlauf der kleinsten Zeitdifferenzwerte dtmin(tz) über der Zeit tz der Zeitbasis 21 des Signalempfängers 20. Es lässt sich erkennen, dass die kleinsten Zeitdifferenzwerte dtmin(t) um eine gerade Driftkennlinie DK schwanken, deren Steigung den Gangunterschied zwischen den Zeitbasen 11 und 21 angibt. Die gerade Driftkennlinie DK kann im Rahmen eines Schätzverfahrens bestimmt werden, beispielsweise auf der Basis der Methode der kleinsten Quadrate.

Durch Ermittlung der Steigung der Driftkennlinie DK kann die Steuereinrichtung 22 des Signalempfängers 20 somit den Gangunterschied zwischen den Zeitbasen 11 und 21 berechnen bzw. schätzen.

Nach der Ermittelung der Driftkennlinie DK und deren Steigung bzw. nach der Ermittlung des Gangunterschiedes zwischen den Zeitbasen 11 und 21 kann nachfolgend eine Driftkorrektur bzw. Driftkompensation der kleinsten Zeitdifferenzwerte dtmin(t) vorgenommen werden, indem diese um den jeweiligen Gangunterschied korrigiert werden. Anschaulich entspricht dies einem Verkippen der Driftkennlinie DK und ein Verschieben der kleinsten Zeitdifferenzwerte dtmin(t) gemäß der Pfeilrichtung P in Figur 4. Nach der Driftkorrektur bzw. Driftkompensation kann von den "kleinsten Zeitdifferenzwerte dtmin(t)" der allerkleinste Zeitdifferenzwert dtmin'(t0) gesucht werden, der beispielsweise zum Zeitpunkt t0 eingetreten ist. Dieser allerkleinste Zeitdifferenzwert dtmin'(t0) kann als Zeitversatz dTz(t0) zum Zeitpunkt t0 interpretiert werden und unter Berücksichtigung des Gangunterschiedes der Zeitbasen für die Bestimmung des Zeitversatzes dTz(t) zu anderen Zeitpunkten verwendet werden.

Der geschätzte Zeitversatz dTz kann zum Bearbeiten eines eingehenden Ereignissignals E(Ta, Taz) herangezogen werden, wie dies oben bereits im Zusammenhang mit der Figur 1 erläutert worden ist.

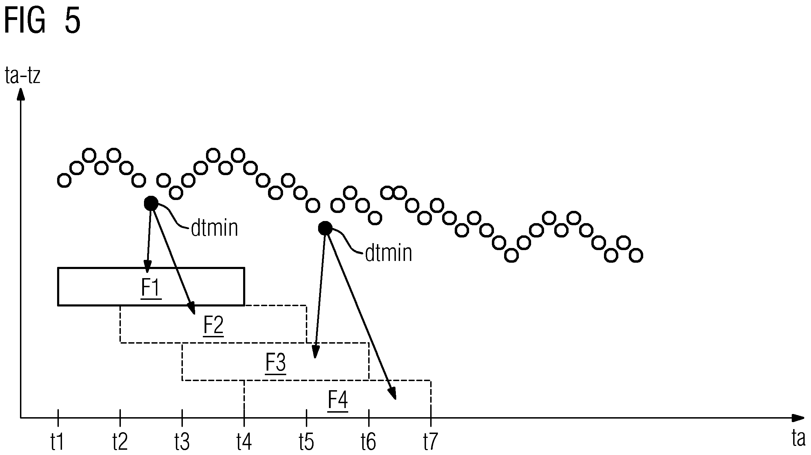

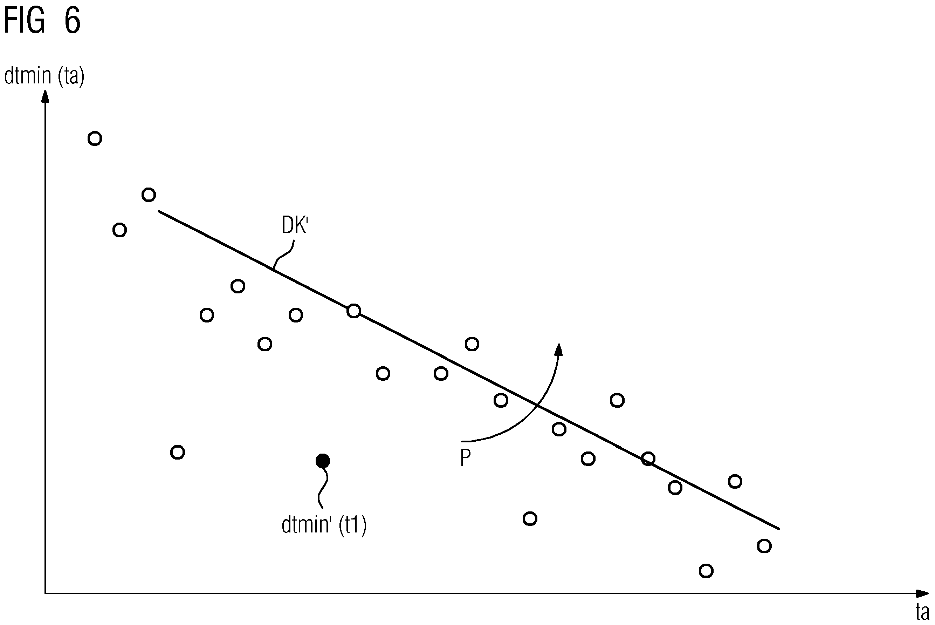

Die Figuren 5 und 6 zeigen beispielhaft, wie der Signalgeber 10 die Zeitstempeltelegramme DT(tz) zur Schätzung des Gangunterschiedes und des zeitabhängigen Zeitversatzes dTa(t) auswerten kann.

Der Signalgeber 10 wird die in den Zeitstempeltelegrammen DT(tz) enthaltenen Zeitstempel tz auslesen und durch Subtraktion des jeweiligen Empfangszeitpunkts ta gemäß Zeitbasis 11 Zeitdifferenzwerte ta-tz bilden und diese über der Zeit der eigenen Zeitbasis ta auswerten. Dies zeigt beispielhaft die Figur 5.

In der Figur 5 lässt sich erkennen, dass die Zeitdifferenzwerte zeitfensterbezogen ausgewertet werden, wobei jedes eine Vielzahl an zeitlich aufeinander folgenden Zeitdifferenzwerten ta-tz enthält. Bei der Darstellung gemäß Figur 5 erstreckt sich das Zeitfenster F1 vom Zeitpunkt t1 bis zum Zeitpunkt t4, das Zeitfenster F2 vom Zeitpunkt t2 bis zum Zeitpunkt t5, das Zeitfenster F3 vom Zeitpunkt t3 bis zum Zeitpunkt t6 und das Zeitfenster F4 vom Zeitpunkt t4 bis zum Zeitpunkt t7. Zeitlich benachbarte Zeitfenster überschneiden sich vorzugsweise mindestens um die Hälfte der Zeitfensterdauer, bei dem Ausführungsbeispiel gemäß Figur 5 genau um 2/3.

Die Steuereinrichtung 12 des Signalgebers 10 bestimmt für jedes Zeitfenster F1-F4 jeweils den kleinsten Zeitdifferenzwert dtmin(t). Die Figur 6 zeigt beispielhaft den zeitlichen Verlauf der kleinsten Zeitdifferenzwerte dtmin(t) über der Zeit ta der Zeitbasis 11 des Signalgebers 10. Es lässt sich erkennen, dass die kleinsten Zeitdifferenzwerte dtmin(t) um eine gerade Driftkennlinie DK' schwanken, deren Steigung den Gangunterschied zwischen den Zeitbasen 11 und 21 angibt. Die gerade Driftkennlinie DK' kann im Rahmen eines Schätzverfahrens bestimmt werden, beispielsweise auf der Basis der Methode der kleinsten Quadrate.

Durch Ermittlung der Steigung der Driftkennlinie DK' kann die Steuereinrichtung 12 des Signalgebers 10 somit den Gangunterschied zwischen den Zeitbasen 11 und 21 berechnen bzw. schätzen und mit diesem den zeitabhängigen Zeitversatz dTa(t) zwischen den beiden Zeitbasen 11 und 12 zu jedem Zeitpunkt berechnen bzw. schätzen.

Nach der Ermittlung der Driftkennlinie DK' und deren Steigung bzw. nach der Ermittlung des Gangunterschiedes zwischen den Zeitbasen 11 und 21 gemäß der Figur 6 kann nachfolgend auch eine Driftkorrektur bzw. Driftkompensation der kleinsten Zeitdifferenzwerte dtmin(t) vorgenommen werden, indem diese um den jeweiligen Gangunterschied korrigiert werden. Anschaulich entspricht dies einem Verkippen der Driftkennlinie DK' und ein Verschieben der kleinsten Zeitdifferenzwerte dtmin(t) gemäß der Pfeilrichtung P in Figur 6. Nach der Driftkorrektur bzw. Driftkompensation kann von den "kleinsten Zeitdifferenzwerten dtmin(t)" der allerkleinste Zeitdifferenzwert dtmin'(t1) gesucht werden. Dieser allerkleinste Zeitdifferenzwert dtmin'(t1) kann als Zeitversatz dTa(t1) zum Zeitpunkt t1 interpretiert werden und unter Berücksichtigung des Gangunterschiedes der Zeitbasen für die Bestimmung des Zeitversatzes dTa(t) zu anderen Zeitpunkten verwendet werden.

Der geschätzte Zeitversatz dTa(t) wird zum Bilden des Ereignissignals E(Ta, Taz) herangezogen, beispielsweise, um unter Berücksichtigung des Gangunterschieds den Zeitpunkt Taz zu berechnen.

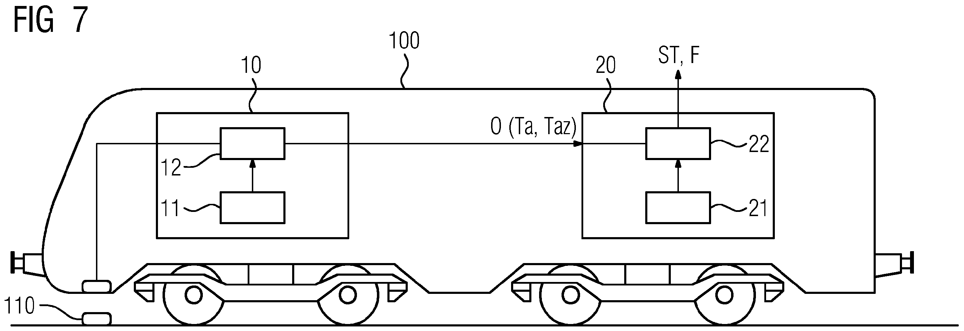

Die Figur 7 zeigt ein Ausführungsbeispiel für ein Schienenfahrzeug 100 mit einem Signalgeber 10 und einem Signalempfänger 20.

Der Signalgeber 10 entspricht vom Aufbau her dem Signalgeber 10 gemäß Figur 1 und weist eine schienenfahrzeugseitige Zeitbasis 11 und eine schienenfahrzeugseitige Steuereinrichtung 12 auf. Der Signalgeber 10 kann als Ereignissignal beispielsweise ein eine Ortung des Schienenfahrzeugs 100 an einer Balise 110 angebendes Ortungssignal O(Ta, Taz) erzeugen, das den Zeitpunkt Ta der Ortung gemäß der Zeitbasis 11 des Signalgebers 10 und einen Korrekturwert angibt, der mittelbar oder unmittelbar den vom Signalgeber 10 geschätzten Zeitversatz dTa zwischen der Zeitbasis 21 des Signalempfängers 20 und der Zeitbasis 11 des Signalgebers 10 angibt. Der Korrekturwert kann beispielsweise in Form eines vom Signalgeber 10 geschätzten Zeitpunkts Taz des Ortungsereignisses gemäß der Zeitbasis 21 des Signalempfängers 20 übertragen werden.

Der Signalempfänger 20 entspricht vom Aufbau her dem Signalgeber 20 gemäß Figur 1 und weist eine schienenfahrzeugseitige Zeitbasis 21 und eine schienenfahrzeugseitige Steuereinrichtung 22 auf. Der Signalempfänger 20 kann unter Heranziehung des Ortungssignals O(Ta, Taz) ein Fehlersignal F oder ein das Schienenfahrzeug 100 steuerndes Steuersignal ST erzeugen. Bezüglich der Arbeitsweise des Signalgebers 10 und des Signalempfängers 20 und bezüglich der Zusammenarbeit zwischen Signalgeber 10 und Signalempfänger 20 sei auf die obigen Ausführungen im Zusammenhang mit den Figuren 1-6 verwiesen, die hier entsprechend gelten.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichen

- 10: Signalgeber
- 20: Signalempfänger
- 11: Zeitbasis
- 12: Steuereinrichtung
- 21: Zeitbasis
- 22: Steuereinrichtung
- 100: Schienenfahrzeug
- 110: Balise

- DK: Driftkennlinie
- DK': Driftkennlinie
- dtmin: kleinster Zeitdifferenzwert
- dtmin(ta): kleinster Zeitdifferenzwert über Zeit nach Zeitbasis des Signalgebers
- dtmin(tz): kleinster Zeitdifferenzwert über Zeit nach Zeitbasis des Signalempfängers
- dtmin(to): allerkleinster Zeitdifferenzwert
- dtmin(t1): allerkleinster Zeitdifferenzwert
- DT(ta): Zeitstempeltelegramm
- DT(tz): Zeitstempeltelegramm
- E(Ta, Taz): Ereignissignal
- F: Fehlersignal
- F1-F4: Zeitfenster
- O(Ta, Taz): Ortungssignal
- P: Pfeilrichtung
- ST: Steuersignal
- ta: Zeit nach Zeitbasis des Signalgebers
- tz: Zeit nach Zeitbasis des Signalempfängers
- ta-tz: Zeitdifferenzwert
- tz-ta: Zeitdifferenzwert
- Ta: Zeitpunkt des Ereignisses
- Ta': geschätzter Zeitpunkt
- Taz: geschätzter Zeitpunkt

## Patentansprüche

1. Verfahren zum Übertragen eines Ereignissignals (E(Ta, Taz)) von einem Signalgeber (10) zu einem Signalempfänger (20), wobei das Ereignissignal (E(Ta, Taz)) ein Ereignis und den Zeitpunkt des Ereignisses **kennzeichnet,**
**dadurch gekennzeichnet**, dass
- der Signalgeber (10) vom Signalempfänger (20) Zeitstempeltelegramme (DT(tz)) erhält, die jeweils die Uhrzeit des Signalempfängers (20) angeben, und anhand der empfangenen Uhrzeiten des Signalempfängers (20) den Zeitversatz zwischen der eigenen Zeitbasis (11) und der des Signalempfängers (20) schätzt,
- der Signalgeber (10) den Zeitpunkt (Taz) des Ereignisses gemäß der Zeitbasis (21) des Signalempfängers (20) schätzt, und zwar unter Heranziehung des Zeitpunkts (Ta) des Ereignisses gemäß der eigenen Zeitbasis (11) und dem geschätzten Zeitversatz (dTa) zwischen der eigenen Zeitbasis (11) und der anderen Zeitbasis (21),
- der Signalgeber (10) ein Ereignissignal (E(Ta, Taz)) erzeugt, das den Zeitpunkt (Ta) des Ereignisses gemäß der Zeitbasis (11) des Signalgebers (10) und einen Korrekturwert (Taz) kennzeichnet, der mittelbar oder unmittelbar den vom Signalgeber (10) geschätzten Zeitversatz zwischen der Zeitbasis (21) des Signalempfängers (20) und der Zeitbasis (11) des Signalgebers (10) angibt,
- der Signalempfänger (20) nach Empfang des Ereignissignals (E(Ta, Taz)) den Zeitpunkt des Ereignisses gemäß der Zeitbasis (11) des Signalgebers (10) schätzt, und zwar unter Heranziehung des vom Signalgeber (10) geschätzten Zeitpunkts (Taz) des Ereignisses gemäß der Zeitbasis (21) des Signalempfängers (20) und einem vom Signalempfänger (20) geschätzten Zeitversatz zwischen der Zeitbasis (21) des Signalempfängers (20) und der Zeitbasis (11) des Signalgebers (10), und
- der Signalempfänger (20) bei der Auswertung des Ereignissignals (E(Ta, Taz)) den im Ereignissignal (E(Ta, Taz)) angegebenen Zeitpunkt (Ta) des Ereignisses gemäß der Zeitbasis (11) des Signalgebers (10) und den vom Signalempfänger (20) nach Empfang des Ereignissignals (E(Ta, Taz)) geschätzten Zeitpunkt des Ereignisses gemäß der Zeitbasis (11) des Signalgebers (10) berücksichtigt.

2. Verfahren nach Anspruch 1,
**dadurch gekennzeichnet, dass** der Signalempfänger (20) die Differenz zwischen dem im Ereignissignal (E(Ta, Taz)) angegebenen Zeitpunkt (Ta) des Ereignisses gemäß der Zeitbasis (11) des Signalgebers (10) und dem vom Signalempfänger (20) nach Empfang des Ereignissignals (E(Ta, Taz)) geschätzten Zeitpunkt des Ereignisses gemäß der Zeitbasis (11) des Signalgebers (10) bildet und die weitere Auswertung des Ereignissignals (E(Ta, Taz)) in Abhängigkeit von der Höhe der Differenz durchführt.

3. Verfahren nach Anspruch 2,
**dadurch gekennzeichnet, dass** der Signalempfänger (20) das Ereignissignal (E(Ta, Taz)) verwirft, wenn die Differenz eine vorgegebene Schwelle erreicht oder überschreitet.

4. Verfahren nach einem der voranstehenden Ansprüche,
**dadurch gekennzeichnet, dass**
- der Signalgeber (10) einen schienenfahrzeugseitigen Ortungsrechner aufweist, der als Ereignissignal (E(Ta, Taz)) ein den Ort eines Schienenfahrzeugs angebendes Ortungssignal erzeugt, und
- der Signalempfänger (20) einen schienenfahrzeugseitigen Steuerrechner aufweist, der unter Heranziehung des Ortungssignals und zumindest eines der genannten Zeitpunkte (Ta, Ta', Taz) des Ereignisses ein das Schienenfahrzeug steuerndes Steuersignal (ST) erzeugt.

5. Verfahren nach einem der voranstehenden Ansprüche,
**dadurch gekennzeichnet, dass**
- der Signalempfänger (20) vom Signalgeber (10) Zeitstempeltelegramme ((DT(ta)) erhält, die jeweils die Uhrzeit des Signalgebers (10) angeben, und
- der Signalempfänger (20) anhand der empfangenen Uhrzeiten des Signalgebers (10) den Zeitversatz zwischen der eigenen Zeitbasis (21) und der des Signalgebers (10) schätzt.

6. Verfahren nach Anspruch 5,
**dadurch gekennzeichnet, dass** die Schätzung des Zeitversatzes derart durchgeführt wird,
- dass für jede empfangene Uhrzeit jeweils ein Zeitdifferenzwert (tz-ta, ta-tz) zwischen der empfangenen Uhrzeit und der eigenen Uhrzeit zum Empfangszeitpunkt des jeweiligen Zeitstempeltelegramms ermittelt wird,
- die Zeitdifferenzwerte (tz-ta, ta-tz) zeitfensterbezogen ausgewertet werden, wobei jedes Zeitfenster (F1-F4) eine Vielzahl an zeitlich aufeinander folgenden Zeitdifferenzwerten (tz-ta, ta-tz) enthält und wobei für jedes Zeitfenster (F1-F4) jeweils der kleinste Zeitdifferenzwert (dtmin) bestimmt wird, und
- mit den kleinsten Zeitdifferenzwerten (dtmin) der Zeitfenster der Gangunterschied und/oder der Zeitversatz ermittelt wird.

7. Verfahren nach Anspruch 6,
**dadurch gekennzeichnet, dass** sich zeitlich benachbarte Zeitfenster (F1-F4) mindestens um die Hälfte der Zeitfensterdauer, besonders bevorzugt um 2/3 oder zumindest um 2/3, überschneiden.

8. Verfahren nach einem der voranstehenden Ansprüche 6 bis 7,
**dadurch gekennzeichnet, dass**
- die kleinsten Zeitdifferenzwerte (dtmin) der Zeitfenster einer (F1-F4) Driftkompensation unter Bildung driftkompensierter Zeitdifferenzwerte unterworfen werden,
- von den driftkompensierten Zeitdifferenzwerten der kleinste driftkompensierte Zeitdifferenzwert ermittelt wird und
- mit dem kleinsten driftkompensierten Zeitdifferenzwert (dtmin'(to), dtmin'(t1)) der Zeitversatz gebildet wird.

9. Verfahren nach Anspruch 8,
**dadurch gekennzeichnet, dass**
der kleinste driftkompensierte Zeitdifferenzwert (dtmin'(to), dtmin'(t1)) als Zeitversatz angesehen und weiterverarbeitet wird.

10. Verfahren nach einem der voranstehenden Ansprüche 6 bis 9,
**dadurch gekennzeichnet, dass**
- mit den kleinsten Zeitdifferenzwerten (dtmin) der Zeitfenster (F1-F4) eine Driftkennlinie (DK, DK') bestimmt wird, deren Steigung den Gangunterschied zwischen den Zeitbasen (11, 21) angibt, und
- mit dem durch die Steigung angegebenen Gangunterschied der Zeitbasen (11, 21) der Zeitpunkt des Ereignisses gemäß der anderen Zeitbasis geschätzt wird.

11. Verfahren nach einem der voranstehenden Ansprüche,
**dadurch gekennzeichnet, dass**
der Korrekturwert den vom Signalgeber (10) geschätzten Zeitpunkt (Taz) des Ereignisses gemäß der Zeitbasis des Signalempfängers (20) angibt.

12. Anordnung mit einem Signalgeber (10) und einem Signalempfänger (20), wobei der Signalgeber (10) zum Übertragen eines Ereignissignals (E(Ta, Taz)) zu einem Signalempfänger (20) geeignet ist und wobei das Ereignissignal (E(Ta, Taz)) ein Ereignis und den Zeitpunkt des Ereignisses **kennzeichnet,**
**dadurch gekennzeichnet**, dass
- der Signalgeber (10) derart ausgestaltet ist, dass er
- vom Signalempfänger (20) Zeitstempeltelegramme (DT (tz)) erhält, die jeweils die Uhrzeit des Signalempfängers (20) angeben, und anhand der empfangenen Uhrzeiten des Signalempfängers (20) den Zeitversatz zwischen der eigenen Zeitbasis (11) und der des Signalempfängers (20) schätzt,
- den Zeitpunkt (Taz) des Ereignisses gemäß der Zeitbasis (21) des Signalempfängers (20) schätzt, und zwar unter Heranziehung des Zeitpunkts (Ta) des Ereignisses gemäß der eigenen Zeitbasis (11) und dem geschätzten Zeitversatz (dTa) zwischen der eigenen Zeitbasis (11) und der anderen Zeitbasis (21), und
- bei Auftreten eines Ereignisses ein Ereignissignal (E(Ta, Taz)) erzeugt, das den Zeitpunkt (Ta) des Ereignisses gemäß der Zeitbasis (11) des Signalgebers (10) und einen Korrekturwert (Taz) kennzeichnet, der mittelbar oder unmittelbar den vom Signalgeber (10) geschätzten Zeitversatz (dTa) zwischen der Zeitbasis (21) des Signalempfängers (20) und der Zeitbasis (11) des Signalgebers (10) angibt, und
- der Signalempfänger (20) derart ausgestaltet ist, dass er
- nach Empfang des Ereignissignals (E(Ta, Taz)) den Zeitpunkt des Ereignisses gemäß der Zeitbasis (11) des Signalgebers (10) schätzt, und zwar unter Heranziehung des vom Signalgeber (10) geschätzten Zeitpunkts (Taz) des Ereignisses gemäß der Zeitbasis des Signalempfängers (20) und einem vom Signalempfänger (20) geschätzten Zeitversatz zwischen der Zeitbasis (21) des Signalempfängers (20) und der Zeitbasis (11) des Signalgebers (10), und
- die weitere Auswertung des Ereignissignals (E(Ta, Taz)) in Abhängigkeit von dem im Ereignissignal (E(Ta, Taz)) angegebenen Zeitpunkt (Ta) des Ereignisses gemäß der Zeitbasis des Signalgebers (10) und dem nach Empfang des Ereignissignals (E(Ta, Taz)) geschätzten Zeitpunkt des Ereignisses gemäß der Zeitbasis (11) des Signalgebers (10) durchführt.

13. Anordnung nach Anspruch 12,
**dadurch gekennzeichnet, dass**
- der Signalgeber (10) eine erste schienenfahrzeugseitige Rechnereinrichtung (12) aufweist, die als Ereignissignal (E(Ta, Taz)) ein den Ort eines Schienenfahrzeugs (100) angebendes Ortungssignal (O(Ta, Taz)) erzeugt, und
- der Signalempfänger (20) eine zweite schienenfahrzeugseitige Rechnereinrichtung (22) aufweist, die unter Heranziehung des Ortungssignals (O(Ta, Taz)) und zumindest eines der genannten Zeitpunkte (Ta, Ta', Tz) des Ereignisses ein das Schienenfahrzeug steuerndes Steuersignal (ST) erzeugt.

## Claims

1. Method for transmission of an event signal (E(Ta, Taz)) from a signal emitter (10) to a signal receiver (20), wherein the event signal (E(Ta, Taz)) identifies an event and the point in time of the event,
**characterised in that**
- the signal emitter (10) receives time stamp telegrams (DT(tz)) from the signal emitter (20), which in each case indicate the clock time of the signal receiver (20), and on the basis of the received clock times of the signal receiver (20) estimates the time delay between its own time base (11) and that of the signal receiver (20),
- the signal emitter (10) estimates the point in time (Taz) of the event in accordance with the time base (21) of the signal receiver (20), specifically utilising the point in time (Ta) of the event in accordance with its own time base (11) and the estimated time delay (dTa) between its own time base (11) and the other time base (21),
- the signal emitter (10) generates an event signal (E(Ta, Taz)), which identifies the point in time (Ta) of the event, in accordance with the time base (11) of the signal emitter (10), and identifies a correction value (Taz), which indirectly or directly indicates the time delay, estimated by the signal emitter (10), between the time base (21) of the signal receiver (20) and the time base (11) of the signal emitter (10),
- the signal receiver (20), after receiving the event signal (E(Ta, Taz)), estimates the point in time of the event in accordance with the time base (11) of the signal emitter (10), specifically utilising the point in time (Taz) of the event estimated by the signal emitter (10) in accordance with the time base (21) of the signal receiver (20) and a time delay, estimated by the signal receiver (20), between the time base (21) of the signal receiver (20) and the time base (11) of the signal emitter (10), and
- the signal receiver (20), when evaluating the event signal (E(Ta, Taz)), takes into consideration the point in time (Ta) of the event indicated in the event signal (E(Ta, Taz)) in accordance with the time base (11) of the signal emitter (10) and the point in time of the event estimated by the signal receiver (20) after receiving the event signal (E(Ta, Taz)) in accordance with the time base (11) of the signal emitter (10) .

2. Method according to claim 1,
**characterised in that** the signal receiver (20) forms the difference between the point in time (Ta) of the event indicated in the event signal (E(Ta, Taz)) in accordance with the time base (11) of the signal emitter (10) and the point in time of the event estimated by the signal receiver (20) after receiving the event signal (E(Ta, Taz)) in accordance with the time base (11) of the signal emitter (10), and carries out the further evaluation of the event signal (E(Ta, Taz)) as a function of the amount of the difference.

3. Method according to claim 2,
**characterised in that** the signal receiver (20) discards the event signal (E(Ta, Taz)) if the difference reaches or exceeds a predefined threshold.

4. Method according to one of the preceding claims,
**characterised in that**
- the signal emitter (10) has a rail-vehicle-side locating computer, which generates a locating signal indicating the location of a rail vehicle as the event signal (E(Ta, Taz)), and
- the signal receiver (20) has a rail-vehicle-side control computer, which utilises the locating signal and at least one of the cited points in time (Ta, Ta', Taz) of the event to generate a control signal (ST) which controls the rail vehicle.

5. Method according to one of the preceding claims,
**characterised in that**
- the signal receiver (20) obtains time stamp telegrams ((DT(ta)) from the signal emitter (10), which indicate the clock time of the signal emitter (10) in each case, and
- the signal receiver (20), on the basis of the received clock times of the signal emitter (10), estimates the time delay between its own time basis (21) and that of the signal emitter (10).

6. Method according to claim 5,
**characterised in that**
the estimation of the time delay is carried out such that
- for each received clock time, a time difference value (taz-ta, ta-tz) between the received clock time and the particular clock time at the point in time of receiving the respective time stamp telegram is established in each case,
- the time difference values (tz-ta, ta-tz) are evaluated in relation to a time window, wherein each time window (F1-F4) contains a large number of time difference values (tz-ta, ta-tz) in temporal succession and wherein the lowest time difference value (dtmin) is determined for each time window (F1-F4) in each case, and
- the path difference and/or the time delay is/are established using the lowest time difference values (dtmin) of the time windows.

7. Method according to claim 6,
**characterised in that**
temporally adjacent time windows (F1-F4) overlap at least by half the time window duration, particularly preferably by 2/3 or at least by 2/3.

8. Method according to one of the preceding claims 6 to 7,
**characterised in that**
- the lowest time difference values (dtmin) of the time windows (F1-F4) are subjected to drift compensation by forming drift-compensated time difference values,
- from the drift-compensated time difference values, the lowest drift-compensated time difference value is established and
- using the lowest drift-compensated time difference value (dtmin'(to), dtmin'(t1)), the time delay is formed.

9. Method according to claim 8,
**characterised in that**
the lowest drift-compensated time difference value (dtmin'(to), dtmin'(t1)) is considered as the time delay and is further processed.

10. Method according to one of the preceding claims 6 to 9,
**characterised in that**
- using the lowest time difference values (dtmin) of the time windows (F1-F4), a drift characteristic curve (DK, DK') is determined, the gradient of which indicates the path difference between the time bases (11, 21), and
- using the path difference of the time bases (11, 21) indicated by the gradient, the point in time of the event is estimated in accordance with the other time base.

11. Method according to one of the preceding claims,
**characterised in that**
the correction value indicates the point in time (Taz) of the event estimated by the signal emitter (10) in accordance with the time base of the signal receiver (20).

12. Arrangement with a signal emitter (10) and a signal receiver (20), wherein the signal emitter (10) is suitable for transferring an event signal (E(ta, Taz)) to a signal receiver (20) and wherein the event signal (E(Ta, Taz)) identifies an event and the point in time of the event,
**characterised in that**
- the signal emitter (10) is embodied in such a way that it
- receives time stamp telegrams (DT(tz)) from the signal emitter (20), which in each case indicate the clock time of the signal receiver (20), and on the basis of the received clock times of the signal receiver (20) estimates the time delay between its own time base (11) and that of the signal receiver (20),
- estimates the point in time (Taz) of the event in accordance with the time base (21) of the signal receiver (20), specifically utilising the point in time (Ta) of the event in accordance with its own time base (11) and the estimated time delay (dTa) between its own time base (11) and the other time base (21), and
- when an event occurs, generates an event signal (E(Ta, Taz)), which identifies the point in time (Ta) of the event, in accordance with the time base (11) of the signal emitter (10), and identifies a correction value (Taz), which indirectly or directly indicates the time delay (dTa), estimated by the signal emitter (10), between the time base (21) of the signal receiver (20) and the time base (11) of the signal emitter (10), and
- the signal receiver (20) is embodied in such a way that it,
- after receiving the event signal (E(Ta, Taz)), estimates the point in time of the event in accordance with the time base (11) of the signal emitter (10), specifically utilising the point in time (Taz) of the event estimated by the signal emitter (10) in accordance with the time base of the signal receiver (20) and a time delay, estimated by the signal receiver (20), between the time base (21) of the signal receiver (20) and the time base (11) of the signal emitter (10), and
- carries out the further evaluation of the event signal (E(Ta, Taz)) as a function of the point in time (Ta) of the event indicated in the event signal (E(Ta, Taz)) in accordance with the time base of the signal emitter (10) and the point in time of the event estimated after receiving the event signal (E(Ta, Taz)) in accordance with the time base (11) of the signal emitter (10).

13. Arrangement according to claim 12,
**characterised in that**
- the signal emitter (10) has a first rail-vehicle-side computer facility (12), which generates a locating signal (O(Ta, Taz)) indicating the location of a rail vehicle (100) as the event signal (E(Ta, Taz)), and
- the signal receiver (20) has a second rail-vehicle-side computer facility (22), which utilises the locating signal (O(Ta, Taz)) and at least one of the cited points in time (Ta, Ta', Taz) of the event to generate a control signal (ST) which controls the rail vehicle.

## Revendications

1. Procédé de transmission d'un signal (E(Ta, Taz) d'événement d'un émetteur (10) de signal à un récepteur (20) de signal, le signal (E(Ta, Taz) d'évènement caractérisant un évènement et l'instant de l'événement, **caractérisé en ce que**
- l'émetteur (10) de signal reçoit du récepteur (20) de signal des télégrammes ((DT(tz)) d'horodatage, qui indiquent chacun l'heure du récepteur (20) de signal et, à l'aide des heures reçues du récepteur (20) de signal, estime le décalage de temps entre sa propre base (11) de temps et celle du récepteur (20) de signal,
- l'émetteur (10) de signal estime l'instant (Taz) de l'évènement suivant la base (21) de temps du récepteur (20) de signal et cela en tirant parti de l'instant (Ta) de l'évènement suivant sa propre base (11) de temps et du décalage de temps estimé entre sa propre base (11) de temps et l'autre base (21) de temps,
- l'émetteur (10) de signal produit un signal (E(Ta, Taz) d'événement, qui caractérise l'instant (Ta) de l'évènement suivant la base (11) de temps de l'émetteur (10) de signal et une valeur (Taz) de correction, qui indique, indirectement ou directement, le décalage de temps estimé par l'émetteur (10) de signal entre la base (21) de temps du récepteur (20) de signal et la base (11) de temps de l'émetteur (10) de signal,
- le récepteur (20) de signal, après réception du signal (E(Ta, Taz) d'évènement, estime l'instant de l'évènement suivant la base (11) de temps de l'émetteur (10) de signal et cela en tirant parti de l'instant (Taz) estimé par l'émetteur (10) de signal de l'évènement suivant la base (21) de temps du récepteur (20) de signal et d'un décalage de temps estimé par le récepteur (20) de signal entre la base (21) de temps du récepteur (20) de signal et la base (11) de temps de l'émetteur (10) de signal, et
- le récepteur (20) de signal prend en compte, lors de l'exploitation du signal (E( Ta, Taz)) d'évènement, l'instant (Ta) indiqué dans le signal (E(Ta, Taz)) d'événement de l'évènement suivant la base (11) de temps de l'émetteur (10) de signal et l'instant, estimé par le récepteur (20) de signal, après réception du signal (E(Ta, Taz)) d'évènement, de l'évènement suivant la base (11) de temps de l'émetteur (10) de signal.

2. Procédé suivant la revendication 1
**caractérisé en ce que**
le récepteur (20) de signal forme la différence entre l'instant (Ta), indiqué dans le signal (E(Ta, Taz)) d'évènement, de l'évènement suivant la base (11) de temps de l'émetteur (10) de signal et l'instant, estimé par le récepteur (20) de signal après réception du signal (E(Ta, Taz) ) d'évènement, de l'évènement suivant la base (11) de temps de l'émetteur (10) de signal et effectue l'exploitation supplémentaire du signal (E(Ta, Taz)) d'événement en fonction de la valeur de la différence.

3. Procédé suivant la revendication 2,
**caractérisé en ce que**
le récepteur (20) de signal rejette le signal (E(Ta, Taz)) d'évènement, si la différence atteint ou dépasse un seuil donné à l'avance.

4. Procédé suivant l'une des revendications précédentes, **caractérisé en ce que**
- l'émetteur (10) de signal a un calculateur de localisation du côté d'un véhicule ferroviaire, qui produit comme signal (E(Ta, Taz)) d'évènement un signal de localisation indiquant l'emplacement d'un véhicule ferroviaire et
- le récepteur (20) de signal a un calculateur de commande du côté du véhicule ferroviaire, qui, en tirant parti du signal de localisation et d'au moins l'un des instants (Ta, Ta', Taz) mentionnés de l'évènement, produit un signal (ST) de commande commandant le véhicule ferroviaire.

5. Procédé suivant l'une des revendications précédentes, **caractérisé en ce que**
- le récepteur (20) de signal reçoit de l'émetteur (10) de signal des télégrammes ((DT(ta)) d'horodatage, qui indiquent chacun l'heure de l'émetteur (10) de signal, et
- le récepteur (20) de signal estime, à l'aide des heures reçues de l'émetteur (10) de signal, le décalage de temps entre sa propre base (21) de temps et celle de l'émetteur (10) de signal.

6. Procédé suivant la revendication 5,
**caractérisé en ce que**
on effectue l'évaluation du décalage de temps de manière,
- à déterminer, pour chaque heure reçue, respectivement, une valeur (tz-ta, ta-tz) de différence de temps entre l'heure reçue et l'heure propre à l'instant de réception du télégramme respectif d'horodatage,
- à exploiter les valeurs (tz-ta, ta-tz) de différence de temps, rapportées à une fenêtre de temps, chaque fenêtre (F1-F4) de temps contenant une pluralité de valeurs (tz-ta, ta-tz) de différence de temps se succédant dans le temps et dans lequel, pour chaque fenêtre (F1-F4) de temps, on détermine respectivement la valeur (dtmin) de différence de temps la plus petite, et
- à déterminer, par les valeurs (dtmin) de différence de temps des fenêtres de temps, la différence de cours et/ou le décalage de temps.

7. Procédé suivant la revendication 6,
**caractérisé en ce que**
des fenêtres (F1-F4) de temps voisines dans le temps se recoupent au moins de la moitié de la durée des fenêtres de temps, d'une manière particulièrement préférée, des 2/3 ou au moins des 2/3.

8. Procédé suivant l'une des revendications 6 à 7 précédentes,
**caractérisé en ce que**
- on soumet les valeurs (dtmin) de différence de temps les plus petites des fenêtres (F1-F4) de temps à une compensation de décalage en formant des valeurs de différence de temps compensées en décalage,
- on détermine, à partir des valeurs de différence de temps compensées en décalage, la valeur de différence de temps compensée en décalage la plus petite, et
- par la valeur (dtmin'(to), dtmin'(t1)) de différence de temps compensée en décalage la plus petite, on forme le décalage de temps.

9. Procédé suivant la revendication 8,
**caractérisé en ce que**
l'on considère comme décalage de temps et on retraite la valeur (dtmin'(to), dtmin'(t1)) de différence de temps compensée en décalage la plus petite.

10. Procédé suivant l'une des revendications 6 à 9 précédentes,
**caractérisé en ce que**
- on détermine, par les valeurs (dtmin) de différence de temps les plus petites des fenêtres (F1-F4) de temps, une courbe (DK, DK') caractéristique de décalage, dont la pente indique la différence de cours entre les bases (11, 21) de temps, et
- on estime l'instant de l'évènement suivant l'autre base (11, 21) de temps par la différence de cours des bases de temps indiquée par la pente.

11. Procédé suivant l'une des revendications précédentes,
**caractérisé en ce que**
la valeur de correction indique l'instant (Taz), estimé par l'émetteur (10) de signal de l'évènement suivant la base de temps du récepteur (20) de signal.

12. Système comprenant un émetteur (10) de signal et un récepteur (20) de signal, l'émetteur (10) de signal étant propre à transmettre un signal (E(Ta, Taz)) d'évènement à un récepteur (20) de signal et le signal (E(Ta, Taz)) d'évènement caractérisant un évènement et l'instant de l'évènement,
**caractérisé en ce que**
- l'émetteur (10) de signal est conformé de manière à
- recevoir du récepteur (20) de signal des télégrammes (DT(tz)) d'horodatage, qui indiquent chacun l'heure du récepteur (20) de signal et, à l'aide des heures reçues du récepteur (20) de signal, estimer le décalage de temps entre sa propre base (11) de temps et celle du récepteur (20) de signal,
- estimer l'instant (Taz) de l'évènement suivant la base (21) de temps du récepteur (20) de signal et cela en tirant parti de l'instant (Ta) de l'évènement suivant sa propre base (11) de temps et du décalage (dTa) de temps estimé entre sa propre base (11) de temps et l'autre base (21) de temps, et
- s'il se produit un évènement, à produire un signal (E(Ta, Taz)) d'évènement, qui caractérise l'instant (Ta) d'évènement suivant la base (11) de temps de l'émetteur (10) de signal et une valeur (Taz) de correction, qui indique, indirectement ou directement, le décalage (dTa) de temps estimé par l'émetteur (10) de signal entre la base (21) de temps du récepteur (20) de signal et la base (11) de temps de l'émetteur (10) de signal, et
- le récepteur (20) de signal est conformé de manière
- à estimer, après réception du signal (E(Ta, Taz)) d'évènement, l'instant de l'évènement suivant la base (11) de temps de l'émetteur (10) de signal, et cela en tirant parti de l'instant (Taz), estimé par l'émetteur (10) de signal de l'évènement suivant la base de temps du récepteur (20) de signal et d'un décalage de temps, estimé par le récepteur (20) de signal, entre la base (21) de temps du récepteur (20) de signal et la base (11) de temps de l'émetteur (10) de signal, et
- à effectuer l'exploitation supplémentaire du signal (E(Ta, Taz)) d'évènement en fonction de l'instant (Ta), indiqué dans le signal (E(Ta, Taz)) d'évènement, de l'évènement suivant la base de temps de l'émetteur (10) de signal et de l'instant, estimé après la réception du signal (E(Ta, Taz)) d'évènement, de l'évènement suivant la base (11) de temps de l'émetteur (10) de signal.

13. Système suivant la revendication 12,
**caractérisé en ce que**
- l'émetteur (10) de signal a un premier dispositif (12) de calcul du côté du véhicule ferroviaire, qui produit, comme signal (E(Ta, Taz)) d'évènement un signal (O(Ta, Taz)) de localisation indiquant l'emplacement d'un véhicule (100) ferroviaire, et
- le récepteur (20) de signal a un dispositif (22) de calcul, qui, en tirant parti du signal (O(Ta, Taz)) de localisation et d'au moins l'un des instants (Ta, Ta', Tz) mentionnés de l'évènement, produit un signal (ST) de commande commandant le véhicule ferroviaire.
